# EUROPÄISCHE PATENTANMELDUNG

(11) **EP 2 384 844 A1**
(43) Veröffentlichungstag der Anmeldung: **09.11.2011**
(21) Anmeldenummer: 11156462.1
(22) Anmeldetag: 01.03.2011
(51) Int. Cl.: B23K 11/087, B23K 11/14, B23K 11/16, B23K 11/26, E04D 13/064

(54) **Dachentwässerungsteil aus mindestens einem Stahlblechzuschnitt und Herstellverfahren hierfür**

(30) Priorität: 06.05.2010 DE 102010019629
(71) Anmelder: Zambelli Fertigungs GmbH & Co. KG, 94481 Grafenau (DE)
(72) Erfinder: Zambelli, Franz, 94481 Grafenau (DE)
(74) Vertreter: Prietsch, Reiner

(57) **Zusammenfassung**

Ein Dachentwässerungsteil aus mindestens einem verzinkten Stahlblechzuschnitt mit sich überlappenden, dauerhaft verbundenen Randbereichen (1a, 1b) hat eine wasserdichte Verbindungsnaht unter Erhaltung des durch die Verzinkung gegebenen Korrosionsschutzes, wenn die überlappten Randbereiche (1a, 1b) des Stahlblechzuschnitts oder der Stahlblechzuschnitte mittels Kondensatorentladungsschweißung unterbrechungsfrei verbunden sind.

## Beschreibung

Die Erfindung betrifft ein Dachentwässerungsteil aus mindestens einem verzinkten Stahlblechzuschnitt mit überlappenden und dauerhaft verbundenen Randbereichen.

Der Begriff "Dachentwässerungsteil" wird im Folgenden als Oberbegriff insbesondere für Dachrinnen, Dachrinnenwinkel, Einhängstutzen, Fallrohre und Rohrbögen verwendet, jedoch ohne Beschränkung hierauf. Insbesondere Dachrinnen, Fallrohre und Rohrbögen werden im Regelfall aus einem einzigen, entsprechend der Abwicklung ausgestanzten Blechzuschnitt hergestellt. Der Blechzuschnitt wird z.B. zu einem Fallrohr so gerundet, dass die dann sich überlappend gegenüberliegenden Ränder oder Randbereiche im letzten Fertigungsschritt dauerhaft miteinander verbunden werden können. Aus Korosionsschutzgründen müssen die fertigen Dachentwässerungsteile aus blankem Stahlblech nachträglich im Zinkbad feuerverzinkt werden. Dies verursacht hohe Kosten und ist umweltbelastend.

Dachentwässerungsteile, die aus einem Stück bestehen und keine Verbindungsnähte haben, können demgegenüber preiswerter und umweltschonender aus verzinktem Stahlblech hergestellt werden. Zur Herstellung z.B. von Fallrohren oder Rohrbögen aus solchen verzinkten Blechzuschnitten müssen nach dem Runden jedoch Längsnähte ausgeführt werden. Andere Dachentwässerungsteile aus mehr als einem Stahlblechzuschnitt erfordern ebenfalls Fügeverbindungen. Die jeweilige Längsnaht oder der Stoß können zwar elektrisch oder autogen verschweißt werden, jedoch verbrennt dabei im Nahtbereich die Verzinkung, so dass eine anschließende Feuerverzinkung mit den oben genannten Nachteilen notwendig ist. Alternativ und ohne Beschädigung der Verzinkung können die Verbindungsnähte als Falz, meist als liegender Falz, ausgeführt werden. Falznähte haben jedoch den Nachteil, dass sie nicht wasserdicht sind.

Aus der DE 870 882 C ist ein insbesondere für die Herstellung von Konservendosen vorgeschlagenes Verfahren bekannt, bei dem sich überlappende Randbereiche eines Stahlblechzuschnitts mittels Widerstandsschweißung derart dauerhaft verbunden werden, dass die Schweißzone sich nur über einen Teil der Breite der Überlappung erstreckt.

Aus der DE 10 2004 057 615 A1 ist es bekannt, zur Herstellung einer Rohrleitung die Längsränder von zwei Halbschalen stumpf mittels Kondensatorentladungsschweißen dauerhaft zu verbinden.

Der Erfindung liegt die Aufgabe zugrunde, ausgehend von bereits verzinktem Stahlblech ein Dachentwässerungsteil mit wasserdichter Verbindungsnaht ohne Beeinträchtigung des durch die Verzinkung gegebenen Korosionsschutzes zu schaffen. Die Erfindung bezieht sich desweiteren auf ein geeignetes Herstellverfahren.

Die genannte Aufgabe ist erfindungsgemäß dadurch gelöst, dass der eine der überlappenden Randbereiche eine randparallele Sicke hat, deren konvexe Seite dem anderen Randbereich zugewandt ist und dass die überlappenden Randbereiche des Stahlblechzuschnitts oder der Stahlblechzuschnitte mittels Kondensatorentladungsschweißung linienförmig und unterbrechungsfrei längs der Scheitellinie der Sicke verbunden sind.

Überraschenderweise hat sich nämlich gezeigt, dass das Kondensatorentladungsschweißen im Gegensatz zu dem üblichen Widerstandspressschweißverfahren einen so schnellen Stromanstieg hat, dass eine im Querschnitt nahezu punktförmige Verschweißung entsteht, ohne dass die an die Schweißnaht angrenzenden Materialbereiche so heiß werden, dass die Verzinkung leidet oder gar verbrennt. Folglich bleibt die Verzinkung bis unmittelbar an die Schweißnaht erhalten.

Vorzugsweise hat der eine der überlappenden Randbereiche eine randparallele Sicke, deren konvexe Aussenseite als Wulst dem anderen Randbereich, z.B. des zu einem Rohr gerundeten Zuschnitts oder eines zweiten Zuschnitts, zugewandt ist. Die Schweißnaht verläuft linienförmig und unterbrechungsfrei auf der Scheitellinie des Wulstes. Dazu trägt vor allem die randparallele Sicke bei, die als Wulst dem anderen Randbereich, z.B. des zu einem Rohr gerundeten Zuschnitts oder eines zweiten Zuschnitts, zugewandt ist, denn die Lage der Schweißnaht ist genau definiert, verläuft nämlich auf der Scheitellinie des Wulstes.

Die Sicke kann sowohl im überlappten als auch im überlappenden Randbereich ausgebildet sein. Aus optischen Gründen ist die erstere Alternative bevorzugt.

Die Sicke kann sehr flach sein. Dann bleibt der Spalt zwischen dem über die Schweißnaht überstehenden Randstreifen des Zuschnitts und dem überlappten anderen Randbereich sehr klein.

Stattdessen kann das Dachentwässerungsteil auch so ausgeführt werden, dass der über die Sicke des einen Randbereiches überstehende Teil des anderen Randbereiches zumindest im Wesentlichen spaltfrei auf dem überlappten Randbereich aufliegt. Dies kann entweder durch passend geformte Elektroden schon während der Kondensatorentladungsschweißung oder durch nachträgliches Andrücken des überstehenden Teils des anderen Randbereiches auf den überlappten Randbereich erreicht werden.

Auch der dann noch verbleibende Versprung um die Blechdicke kann vermieden werden. Dies lässt sich z.B. dadurch erreichen, dass einer der beiden überlappenden Randbereiche vor der Kondensatorentladungsschweißung mit einer Stufe versehen wird, die in etwa gleich der Blechdicke ist. Dann gehen die überlappenden Randbereiche nach dem Fügen zumindest im Wesentlichen stufenfrei ineinander über.

Zur Herstellung eines derartigen Dachentwässerungsteiles werden die sich überlappenden Randbereiche des Zuschnitt durch Kondensatorentladungsschweißen in einem einzigen Schweißschritt über ihre gesamte Länge verbunden. Dadurch wird sichergestellt, dass die Schweißnaht unterbrechungsfrei und damit wasserdicht ist.

Vorzugsweise wird in den einen der überlappenden Randbereiche eine randparallele Sicke eingeprägt, der andere Randbereich über der konvexen Seite der Sicke positioniert, eine der Schweißelektroden mit einer Länge mindestens gleich der Länge der zu erzeugenden Naht in der Sicke und eine Gegenelektrode gleicher Länge auf der von der Sicke abgewandten Seite des anderen Randbereiches positioniert und abschließend eine einzige Kondensatorentladung ausgelöst.

Bei dem erfindungsgemäß vorgeschlagenen Verfahren ist die Nahtlänge zwar auf die maximal verfügbare Länge der Schweißelektroden begrenzt. Die Länge der Elektroden hängt wiederum insbesondere von der Leistungsfähigkeit der Schweißmaschine ab. Sehr lange Schweißnähte können durch einen Zwischentransport des Werkstücks oder der Elektroden und einen weiteren Schweißschritt erzeugt werden, und zwar derart, dass der Anfang der zweiten Schweißnaht das Ende der ersten Schweißnaht ein kleines Stück überdeckt.

Um einen Spalt zwischen dem über die Schweißnaht überstehenden Randstreifen des Zuschnitts und dem überlappten anderen Randbereich zumindest weitgehend zu vermeiden, kann der über die Sicke des einen Randbereiches überstehende Teil des anderen Randbereiches an den überlappten Randbereich angedrückt werden.

Ein zumindest nahezu stufenfreier Übergang wird z.B. dann erzielt, wenn auf der von der Kante des einen Randbereiches abgewandten Seite dessen Sicke und parallel zu dieser eine Stufe entsprechend der Stärke des Blechzuschnitts eingeprägt wird.

Ein Dachentwässerungsteil nach der Erfindung und ein Verfahren zu dessen Herstellung werden nachfolgend anhand der Zeichnung erläutert, die als Ausführungsbeispiel einen Rohrstutzen zeigt.

In Figur 1 ist ein Zuschnitt 1 aus verzinktem Stahlblech entsprechend der Abwicklung des herzustellenden Rohrstutzens dargestellt. Die Blechdicke ist der Deutlichkeit halber größer als maßstäblich gezeichnet.
Figur 2 zeigt den Zuschnitt 1, dessen Randbereiche 1a und 1b zu verbinden sind. Der Randbereich 1a hat, beabstandet von seiner Kante, eine flache Sicke 1d, so dass ein schmaler Randstreifen zur Kante verbleibt.

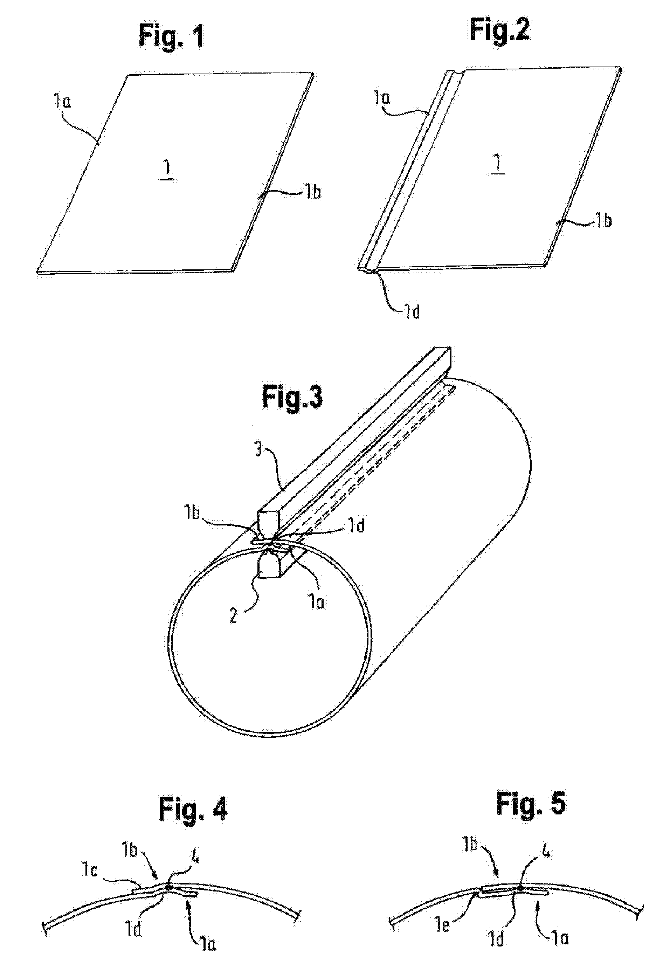

Figur 3 zeigt - nicht maßstäblich zu den Figuren 1 und 2 - den Zuschnitt nach dem üblichen Runden zu dem herzustellenden Rohrstutzen. Der Randbereich 1a mit der Sicke 1d wird von dem Randbereich 1b überlappt. Die bekannten Halte- und Klemmmittel sind nicht dargestellt. In Höhe der Sicke 1d ist eine Schweißelektrode 2 einer nicht dargestellten, handelsüblichen Kondensatorentladungs-Schweißmaschine positioniert. Gegenüber, auf der Außenseite über dem Randbereich 1b, befindet sich die Gegenelektrode 3. Beide Elektroden haben an die zu verschweißenden Flächenbereiche angepasste Kontaktierungsflächen.

Nach dem Zusammenfahren der Elektroden 2 und 3 wird der Schweißstromimpuls ausgelöst. Hierdurch wird eine durchgehende, in Figur 4 im Querschnitt vergrößert dargestellte Schweißnaht 4 erzeugt und vorzugsweise gleichzeitig der über die Schweißnaht 4 überstehende Randstreifen 1c des Randbereiches 1b an den darunter liegenden Teil des Randbereiches 1a angedrückt. Durch das Zusammenfahren der Schweißelektroden 2, 3 verringert sich die Tiefe bzw. Höhe der Sicke 1d.

Figur 5 zeigt in ähnlicher Darstellung wie Figur 4 eine noch weiter verbesserte Ausführungsform, bei der die gefügten Teile bzw. deren Randbereiche 1a und 1b praktisch spalt- und stufenfrei ineinander übergehen. Hierzu ist in den Randbereich 1a parallel zu der Sicke 1d auf deren von der freien Kante dieses Randbereiches abgewandten Seite eine Stufe 1e eingeprägt, deren Höhe ungefähr gleich der Blechstärke ist.

## Patentansprüche

1. Dachentwässerungsteil aus mindestens einem verzinkten Stahlblechzuschnitt (1) mit sich überlappenden, dauerhaft verbundenen Randbereichen (1a, 1b), **dadurch gekennzeichnet, dass** der eine der überlappenden Randbereiche (1a) eine randparallele Sicke (1d) hat, deren konvexe Seite dem anderen Randbereich (1b) zugewandt ist und dass die überlappenden Randbereiche (1a, 1b) des Stahlblechzuschnitts (1) oder der Stahlblechzuschnitte mittels Kondensatorentladungsschweißung linienförmig und unterbrechungsfrei längs der Scheitellinie der Sicke verbunden sind.

2. Dachentwässerungsteil nach Anspruch 1, **dadurch gekennzeichnet, dass** der über die Sicke (1d) des einen Randbereiches (1a) überstehende Teil des anderen Randbereiches (1b) zumindest im Wesentlichen spaltfrei auf dem überlappten Randbereich (1a) aufliegt.

3. Dachentwässerungsteil nach Anspruch 1 oder 2, **dadurch gekennzeichnet, dass** die überlappenden Randbereiche (1a, 1b) zumindest im Wesentlichen stufenfrei ineinander übergehen.

4. Verfahren zum Herstellen eines Dachentwässerungsteiles aus mindestens einem verzinkten Stahlblechzuschnitt durch dauerhaftes Verbinden sich überlappender Randbereiche (1a, 1b), **dadurch gekennzeichnet, dass** in den einen der sich überlappenden Randbereiche (1a) eine randparallele Sicke (1d) eingeprägt wird, dass der andere Randbereich (1b) über der konvexen Seite der Sicke (1d) positioniert wird, dass die eine der Schweißelektroden (2) mit einer Länge mindestens gleich der Länge der zu erzeugenden Naht (4) in der Sicke (1d) und eine Gegenelektrode (3) gleicher Länge auf der von der Sicke (1d) abgewandten Seite des anderen Randbereiches (1b) positioniert werden und anschließend eine einzige Kondensatorentladung ausgelöst wird.

5. Verfahren nach Anspruch 4, **dadurch gekennzeichnet, dass** der über die Sicke (1d) des einen Randbereiches (1a) überstehende Teil des anderen Randbereiches (1b) an den überlappten Randbereich (1a) angedrückt wird.

6. Verfahren nach Anspruch 4 oder 5, **dadurch gekennzeichnet, dass** auf der von der Kante des einen Randbereiches (1a) abgewandten Seite der Sicke (1d) und parallel zu dieser eine Stufe (1e) entsprechend der Stärke des Blechzuschnitts eingeprägt wird.
